# EUROPEAN PATENT APPLICATION

(11) **EP 4 564 856 A1**
(43) Date of publication of application: **04.06.2025**
(21) Application number: 23858876.8
(22) Date of filing: 28.06.2023
(51) Int. Cl.: H04W 4/02

(54) **METHOD AND APPARATUS FOR DETERMINING RELATIVE POSITION**

(30) Priority: 31.08.2022 CN 202211054697
(71) Applicant: Huawei Technologies Co., Ltd., Shenzhen, Guangdong 518129 (CN)
(72) Inventor: WANG, Mingzhe, Shenzhen, Guangdong 518129 (CN); HUANG, Su, Shenzhen, Guangdong 518129 (CN); LI, Cheng, Shenzhen, Guangdong 518129 (CN); WANG, Yi, Shenzhen, Guangdong 518129 (CN)
(74) Representative: Maiwald GmbH
(86) International application number: PCT/CN2023/103455
(87) International publication number: WO 2024/045838

(57) **Abstract**

This application provides a relative position determining method and an apparatus, and relates to the field of communication technologies, to measure relative position information between terminals. The method includes: determining an origin of coordinates and a first coordinate system; and sending first indication information to a second communication apparatus. The first indication information indicates at least one of the origin of coordinates, the first coordinate system, and a position information expression manner, and a primary coordinate axis of the first coordinate system may be in a preset direction or a movement direction of a first communication terminal or a second communication terminal. A first communication apparatus receives relative position information of the second communication terminal.

## Description

This application claims priority to Chinese Patent Application No. 202211054697.1, filed with the China National Intellectual Property Administration on August 31, 2022 and entitled "RELATIVE POSITION DETERMINING METHOD AND APPARATUS", which is incorporated herein by reference in its entirety.

### TECHNICAL FIELD

This application relates to the field of communication technologies, and in particular, to a relative position determining method and an apparatus.

### BACKGROUND

With rapid development of communication technologies, a fifth generation mobile communication system (5th Generation Mobile Network or 5th Generation Wireless System, 5G) and a next-generation mobile communication technology are gradually developing toward features such as high security, scalability, high availability, and high-speed application. Therefore, high-precision positioning is also an important research direction. For example, positioning scenarios in the 5G system mainly include: scenarios such as enhanced mobile broadband (enhanced Mobile Broadband, eMBB) indoor transmission, eMBB outdoor transmission, an internet of things (Internet of Things, IOT), ultra-reliable and low-latency communication (Ultra-Reliable and Low-Latency Communication, URLLC), and massive machine type of communication (Massive Machine Type of Communication, mMTC).

Currently, a positioning technology based on participation of a base station is defined in a standard, and mainly includes uplink positioning, downlink positioning, and uplink and downlink positioning. In the uplink positioning, a base station may detect a sounding reference signal (Sounding Reference Signal, SRS) sent by a terminal device. In the downlink positioning, the terminal device may detect a positioning reference signal (positioning reference signal, PRS) sent by the base station. In the uplink and downlink positioning, both the terminal device and the base station perform detection, to obtain position information of a target terminal. A current protocol includes descriptions of a positioning reference system, and the position information of the target terminal may be determined based on a local coordinate system or a world geodetic system (World Geodetic System, WGS) coordinate system.

However, with development of technologies such as an internet of vehicles and self-driving, communication and positioning between vehicles, between a vehicle and a pedestrian (based on a mobile terminal such as a smartphone), or between a vehicle and a roadside unit (roadside unit, RSU) are highly required. Therefore, mutual detection between terminal devices may be implemented based on a sidelink (Sidelink, SL), to obtain position information of a target terminal device through positioning. An SL positioning manner may mainly include absolute positioning and relative positioning. In the absolute positioning, position information of a target terminal may be obtained in a conventional base station-based positioning manner. However, in the relative positioning, only relative position information between terminals needs to be obtained, for example, represented by using a relative distance and an angle. However, a current standard does not include content such as a position expression manner of a relative position and a coordinate system selection manner in SL positioning.

### SUMMARY

This application provides a relative position determining method and an apparatus, to measure relative position information between terminals.

To achieve the foregoing objective, this application uses the following technical solutions:
According to a first aspect, a relative position determining method is provided, applied to a first communication apparatus, and the method includes: determining an origin of coordinates and a first coordinate system; sending first indication information to a second communication apparatus, where the first indication information indicates at least one of the origin of coordinates, the first coordinate system, and a position information expression manner, and a primary coordinate axis of the first coordinate system is in a preset direction or a movement direction of a first terminal or a second terminal; and receiving relative position information of the second terminal.

In the foregoing implementation, selection of an origin of coordinates, a coordinate system, a corresponding position information expression manner, and the like in sidelink relative positioning is defined, so that a receiver or a communication apparatus that performs positioning measurement may perform positioning measurement and calculation in a specified positioning manner, to obtain relative position information corresponding to the specified positioning manner, thereby improving positioning efficiency.

In an implementation, the origin of coordinates may be a position of the first terminal, the second terminal, a reference terminal, a network device, or a specific reference point. In other words, a communication apparatus that requests positioning may set a specific origin of coordinates based on a requirement, to request to obtain relative position information of a target terminal relative to the origin of coordinates, to implement SL relative positioning.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth. Relative position information may be expressed in a form of a coordinate difference, or may be expressed in a form of a relative distance and an angle of direction, to improve flexibility of representing the relative position information.

In an implementation, the first coordinate system may include a one-dimensional coordinate system, a two-dimensional coordinate system, or a three-dimensional coordinate system. In other words, a communication apparatus that requests positioning may set a specific dimension of a coordinate system based on a requirement, to request to obtain relative position information of a target terminal based on the coordinate system and a specified origin of coordinates, to implement SL relative positioning, and improve flexibility of a relative positioning manner.

In an implementation, the first indication information further includes a conversion relationship between the first coordinate system and a global coordinate system GCS. There is the conversion relationship between the first coordinate system and the global coordinate system. Therefore, a communication apparatus may implement, based on the conversion relationship, conversion between relative position information based on the first coordinate system and absolute position information based on the GCS, to improve flexibility of a positioning manner and flexibility of representing position information.

In an implementation, the first communication apparatus may be the first terminal or the network device, and the second communication apparatus may be the second terminal. In other words, the first terminal or the network device may specify, to the second terminal, information such as an origin of coordinates, a coordinate system, or a relative position information expression manner corresponding to relative positioning, where the network device is an access network device, a location management function LMF network element, an access and mobility management function AMF, or a gateway mobile location center GMLC network element, and may further request to obtain the relative position information of the second terminal, to implement an SL relative positioning procedure, and improve flexibility and positioning efficiency of the positioning procedure.

In an implementation, after the first communication apparatus sends the first indication information to the second terminal, the method further includes: sending first information to the second terminal, where the first information is used by the second terminal to obtain the relative position information of the second terminal based on the first indication information. The first information may be used to implement positioning measurement. The second terminal may obtain a measurement result based on the first information received from the first terminal, so that the second terminal may obtain the relative position information of the second terminal based on the measurement result and a relative positioning manner specified by the first indication information, to implement positioning measurement and position information calculation.

In an implementation, the first communication apparatus is the first terminal, and the second communication apparatus is the network device. In other words, the first terminal may specify, to the network device, information such as an origin of coordinates, a coordinate system, or a relative position information expression manner corresponding to relative positioning, and further request to obtain the relative position information of the second terminal from the network device, to implement an SL relative positioning procedure, and improve flexibility and positioning efficiency of the positioning procedure.

In an implementation, after the first communication apparatus sends the first indication information to the network device, the method further includes: The first communication apparatus sends second information to the second terminal, receives third information from the second terminal, and sends fourth information to the network device, where the fourth information is obtained based on the third information, and the fourth information is used by the network device to obtain the relative position information of the second terminal based on the first indication information.

In the foregoing manner, the first terminal performs signaling interaction of positioning measurement with the second terminal, to obtain a measurement result, so that the network device may obtain the relative position information of the second terminal based on the measurement result and a relative positioning manner specified by the first indication information, to implement positioning measurement and position information calculation.

In an implementation, the first communication apparatus may be a positioning client, the second communication apparatus is the network device, and the network device is an access network device, a location management function LMF network element, an access and mobility management function AMF, or a gateway mobile location center GMLC network element. In other words, the positioning client may initiate a location request, and specify, to the network device, information such as an origin of coordinates, a coordinate system, or a relative position information expression manner corresponding to relative positioning, and the positioning client further requests to obtain the relative position information of the second terminal from the network device, to implement an SL relative positioning procedure, and improve flexibility and positioning efficiency of the positioning procedure.

In an implementation, the network device is configured to: perform a positioning procedure between the first terminal and the second terminal, and feed back a measurement signal to the positioning client; and the positioning client is configured to: obtain the relative position information of the second terminal based on the measurement signal and the first indication information, and feed back the relative position information to the first terminal. In the foregoing manner, the network device triggers signaling interaction of positioning measurement between the first terminal and the second terminal, to obtain the measurement result, so that the positioning client may obtain the relative position information of the second terminal based on the measurement result and a relative positioning manner specified by the first indication information, to implement positioning measurement and position information calculation.

According to a second aspect, a relative position determining method is provided, applied to a second communication apparatus, and the method includes: receiving first indication information from a first communication apparatus, where the first indication information indicates at least one of an origin of coordinates, a first coordinate system, and a position information expression manner, and a primary coordinate axis of the first coordinate system is in a preset direction or a movement direction of a first terminal or a second terminal; and performing a positioning procedure between the first terminal and the second terminal, to obtain a measurement signal, where the measurement signal is used to calculate relative position information of the second terminal based on the first indication information.

In an implementation, the method further includes: receiving first information from the first terminal; obtaining the relative position information of the second terminal based on the first information and the first indication information; and sending the relative position information to the first terminal.

In an implementation, the origin of coordinates is a position of the first terminal, a reference terminal, a specific reference point, or the second terminal.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth.

In an implementation, the first coordinate system includes a one-dimensional coordinate system, a two-dimensional coordinate system, or a three-dimensional coordinate system.

In an implementation, the first indication information further includes a conversion relationship between the first coordinate system and a global coordinate system GCS.

In an implementation, the first communication apparatus is the first terminal or a network device, and the second communication apparatus is the second terminal; the first communication apparatus is the first terminal, and the second communication apparatus is a network device; or the first communication apparatus is a positioning client, and the second communication apparatus is a network device, where the network device is an access network device, a location management function LMF network element, an access and mobility management function AMF, or a gateway mobile location center GMLC network element.

According to a third aspect, a communication apparatus is provided. The apparatus includes a processing module, configured to determine an origin of coordinates and a first coordinate system; and a transceiver module, configured to send first indication information to a second communication apparatus, where the first indication information indicates at least one of the origin of coordinates, the first coordinate system, and a position information expression manner, and a primary coordinate axis of the first coordinate system is in a preset direction or a movement direction of a first terminal or a second terminal; and the transceiver module is further configured to receive relative position information of the second terminal.

In an implementation, the origin of coordinates is a position of the first terminal, the second terminal, a reference terminal, a network device, or a specific reference point.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth.

In an implementation, the first coordinate system includes a one-dimensional coordinate system, a two-dimensional coordinate system, or a three-dimensional coordinate system.

In an implementation, the first indication information further includes a conversion relationship between the first coordinate system and a global coordinate system GCS.

In an implementation, the first communication apparatus is the first terminal or the network device, and the second communication apparatus is the second terminal.

In an implementation, the transceiver module is further configured to send first information to the second terminal, where the first information is used by the second terminal to obtain the relative position information of the second terminal based on the first indication information.

In an implementation, the first communication apparatus is the first terminal, and the second communication apparatus is the network device.

In an implementation, the transceiver module is further configured to: send second information to the second terminal; receive third information from the second terminal; and send fourth information to the network device, where the fourth information is obtained based on the third information, and the fourth information is used by the network device to obtain the relative position information of the second terminal based on the first indication information.

In an implementation, the first communication apparatus is a positioning client, the second communication apparatus is the network device, and the network device is an access network device, a location management function LMF network element, an access and mobility management function AMF, or a gateway mobile location center GMLC network element.

In an implementation, the network device is configured to: perform a positioning procedure between the first terminal and the second terminal, and feed back a measurement signal to the positioning client; and the positioning client is configured to: obtain the relative position information of the second terminal based on the measurement signal and the first indication information, and feed back the relative position information to the first terminal.

According to a fourth aspect, a relative position determining method is provided. The apparatus includes: a transceiver module, configured to receive first indication information from a first communication apparatus, where the first indication information indicates at least one of an origin of coordinates, a first coordinate system, and a position information expression manner, and a primary coordinate axis of the first coordinate system is in a preset direction or a movement direction of a first terminal or a second terminal; and a processing module, configured to perform a positioning procedure between the first terminal and the second terminal, to obtain a measurement signal, where the measurement signal is used to calculate relative position information of the second terminal based on the first indication information.

In an implementation, the transceiver module is further configured to receive first information from the first terminal; the processing module is further configured to obtain the relative position information of the second terminal based on the first signal and the first indication information; and the transceiver module is further configured to send the relative position information to the first terminal.

In an implementation, the origin of coordinates is a position of the first terminal, a reference terminal, a specific reference point, or the second terminal.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth.

In an implementation, the first coordinate system includes a one-dimensional coordinate system, a two-dimensional coordinate system, or a three-dimensional coordinate system.

In an implementation, the first indication information further includes a conversion relationship between the first coordinate system and a global coordinate system GCS.

In an implementation, the first communication apparatus is the first terminal or a network device, and the second communication apparatus is the second terminal; the first communication apparatus is the first terminal, and the second communication apparatus is a network device; or the first communication apparatus is a positioning client, and the second communication apparatus is a network device, where the network device is an access network device, a location management function LMF network element, an access and mobility management function AMF, or a gateway mobile location center GMLC network element.

According to a fifth aspect, a communication apparatus is provided. The communication apparatus includes a processor and a communication interface, the communication interface is configured to transmit a signal, and the processor is configured to perform the method according to any item of the first aspect.

In a possible implementation, the processor is configured to run instructions stored in a memory, to perform the method according to any item of the first aspect.

In a possible implementation, the communication apparatus further includes the memory.

In a possible implementation, the processor is configured to perform the method according to any item of the first aspect through a logic circuit.

According to a sixth aspect, a communication apparatus is provided. The communication apparatus includes a processor and a communication interface, the communication interface is configured to transmit a signal, and the processor is configured to perform the method according to any one of the second aspect.

In a possible implementation, the processor is configured to run instructions stored in a memory, to perform the method according to any one of the second aspect.

In a possible implementation, the communication apparatus further includes the memory.

In a possible implementation, the processor is configured to perform the method according to any one of the second aspect through a logic circuit.

According to a seventh aspect, a computer-readable storage medium is provided, including a program or instructions. When the program or the instructions are run by a processor, the method according to any item of the first aspect is performed.

According to an eighth aspect, a computer-readable storage medium is provided, including a program or instructions. When the program or the instructions are run by a processor, the method according to any one of the second aspect is performed.

According to a ninth aspect, a computer program product is provided. When the computer program product runs on a computer or a processor, the computer or the processor is enabled to perform the method according to any item of the first aspect.

According to a tenth aspect, a computer program product is provided. When the computer program product runs on a computer or a processor, the computer or the processor is enabled to perform the method according to any one of the second aspect.

According to an eleventh aspect, a communication system is provided. The communication system includes the communication apparatus according to any item of the first aspect and the communication apparatus according to any one of the second aspect.

It may be understood that any communication apparatus, computer-readable storage medium, computer program product, or communication system provided above may be configured to perform a corresponding method provided above. Therefore, for beneficial effects that can be achieved by the communication apparatus, computer-readable storage medium, computer program product, or communication system, refer to beneficial effects in the corresponding method provided above. Details are not described herein again.

### BRIEF DESCRIPTION OF DRAWINGS

FIG. 1 is a diagram of an architecture of a communication system according to an embodiment of this application;
FIG. 2 is a scenario entity diagram of an SL communication system according to an embodiment of this application;
FIG. 3 to FIG. 6 are diagrams of a plurality of positioning measurement algorithms according to embodiments of this application;
FIG. 7 is a diagram of a network architecture of a communication system according to an embodiment of this application;
FIG. 8 is a diagram of a structure of a communication apparatus according to an embodiment of this application;
FIG. 9 is a schematic flowchart of a relative position determining method according to an embodiment of this application;
FIG. 10 to FIG. 13 are diagrams of a plurality of coordinate systems in relative positioning according to embodiments of this application;
FIG. 14 to FIG. 16 are schematic flowcharts of a plurality of relative position determining methods according to embodiments of this application; and
FIG. 17 is a diagram of a structure of another communication apparatus according to an embodiment of this application.

### DESCRIPTION OF EMBODIMENTS

Terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more than two.

It should be noted that in this application, the word such as "example" or "for example" represents giving an example, an illustration, or a description. Any embodiment or design scheme described as "example" or "for example" in this application should not be explained as being more preferred or having more advantages than another embodiment or design scheme. Exactly, use of the word "example", "for example", or the like is intended to present a related concept in a specific manner.

The following clearly and completely describes technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

For ease of understanding of this application, the following describes related technologies in embodiments of this application.

A 5G communication technology is a latest-generation cellular mobile communication technology, and is an extension of a fourth-generation mobile communication technology, a third-generation mobile communication technology, and a second-generation mobile communication technology. 5G achieves performance such as a high data rate, a lower delay, lower energy consumption, lower costs, a higher system capacity, and large-scale device connection.

Communication between UEs in a communication system is widely referred to as sidelink (sidelink, SL) communication. For example, a sidelink may include sidelink transmission in a vehicle wireless communication system, or sidelink transmission in a device-to-device (Device to Device, D2D) communication system.

The UE may be a mobile phone (mobile phone), a tablet computer (pad), a computer with a wireless transceiver function, a vehicle-mounted terminal, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile communication network (public land mobile network, PLMN), an on-board unit (on-board unit, OBU), a vehicle-mounted box (also referred to as a vehicle-mounted T-Box (telematics box)), a roadside unit (Roadside Unit, RSU), a vehicle, an intelligent driving vehicle, an apparatus or a chip that can implement a function of the foregoing device, or the like. An application scenario is not limited in embodiments of this application.

In addition, a sidelink communication scenario may further include interaction with an access network device, and the access network device may be specifically a base station. The base station may be in a plurality of forms, such as a macro base station, a micro base station, a relay station, an access point. For example, a base station in embodiments of this application may be a base station (base station, BS) in new radio (new radio, NR), where the base station in 5G NR may also be referred to as a transmission reception point (transmission reception point, TRP) or a next generation NodeB (next generation NodeB, gNB), may be a base transceiver station (base transceiver station, BTS) in a global system for mobile communication (global system for mobile communication, GSM) or code division multiple access (code division multiple access, CDMA), may be an NodeB (NodeB, NB) in a wideband code division multiple access (wideband code division multiple access, WCDMA) system, or may be an evolved NodeB (evolved NodeB, eNB or eNodeB) in a long term evolution (long term evolution, LTE) system.

Methods and steps implemented by the UE in this application may also be implemented by a component (for example, a chip or a circuit) that can be used in the UE. In this application, the UE and the component (for example, the chip or the circuit) that can be disposed in the UE may also be referred to as terminal devices or terminals.

In embodiments of this application, a terminal device or a network device may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more of computer operating systems that implement service processing through a process (process), for example, a Linux operating system, a Unix operating system, an Android operating system, an iOS operating system, or a Windows operating system. The application layer includes applications such as a browser, an address book, text processing software, and instant messaging software. In addition, a specific structure of an execution body of methods provided in embodiments of this application is not specifically limited in embodiments of this application, provided that a program that records code of the methods provided in embodiments of this application can be run to perform communication according to the methods provided in embodiments of this application. For example: The methods provided in embodiments of this application may be performed by a terminal device or a network device, or a functional module that is in a terminal device or a network device and that can invoke and execute a program.

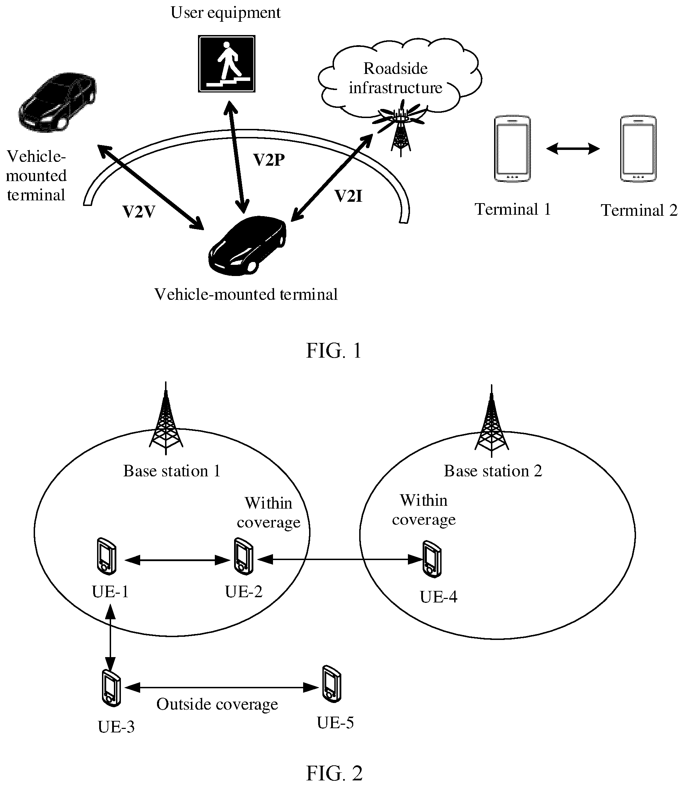

FIG. 1 shows an example of a communication system to which embodiments of this application are applied. The communication system includes sidelink communication systems such as a V2X communication system and a D2D communication system. As shown in FIG. 1, the sidelink communication system may include SL communication between vehicle-mounted terminals (Vehicle to Vehicle, V2V), SL communication between a vehicle-mounted terminal and a roadside infrastructure (Vehicle to Infrastructure, V2I), SL communication between a vehicle-mounted terminal and a pedestrian (Vehicle to Pedestrian, V2P), communication between terminal devices having an energy saving requirement, communication between a pedestrian and a vehicle-mounted terminal, communication between pedestrians, uplink and downlink communication between a vehicle-mounted terminal and a network device (Vehicle to Network, V2N), and the like. The D2D communication system includes SL communication between a terminal 1 and a terminal 2.

In addition, this application may be applied to a system in which terminals directly communicate with each other, such as V2X and D2D, and is also applicable to a communication scenario with network coverage and a communication scenario without network coverage, as shown in FIG. 2. This is not specifically limited in this application.

For example, as shown in FIG. 2, in a scenario in which both UE-1 and UE-2 are within network signal coverage of a base station 1, the UE-1 communicates with the UE-2. In addition, the UE-1 may also communicate with UE-3 outside a network coverage area, terminals UE-2 and UE-4 that are located in signal coverage areas of different base stations may communicate with each other, and the UE-3 and UE-5 that are outside a network signal coverage area may communicate with each other.

Currently, a position obtaining method mainly depends on a positioning technology in which an access network device (for example, a base station) participates, and mainly includes uplink positioning, downlink positioning, and uplink and downlink positioning. Uplink positioning means that the base station detects a sounding reference signal (Sounding Reference Signal, SRS) sent by UE, to obtain position information. Downlink positioning means that the UE detects a positioning reference signal (positioning reference signal, PRS) sent by the base station, to obtain position information. Uplink and downlink positioning means that both the UE and the base station perform signal detection. For example, the base station detects an SRS sent by the UE, the UE detects a PRS sent by the base station, and position information of the UE is obtained based on signal detection results of both the UE and the base station.

Common technologies for uplink positioning include an uplink time difference of arrival (Uplink Time Difference of Arrival, UL-TDOA) algorithm, an uplink angle of arrival (Uplink angle-of-arrival, UL-AOA) algorithm, or the like. Common technologies for downlink positioning include a downlink time difference of arrival (Downlink Time Difference of Arrival, DL-TDOA) algorithm, a downlink angle of departure (Downlink angle-of-departure, DL-AOD) algorithm, and the like. Common technologies for uplink and downlink positioning include a multi-round-trip time (multi-round-trip time, Multi-RTT) algorithm.

The following briefly describes several common positioning technologies.

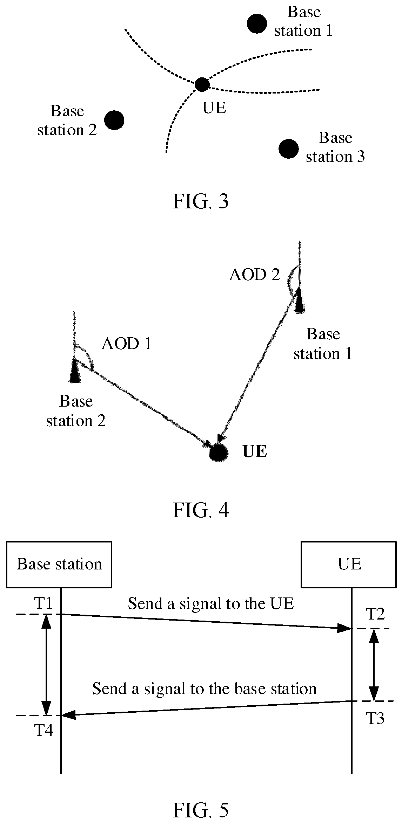

In the DL-TDOA algorithm, UE needs to measure signals sent by at least three base stations, to obtain position information. As shown in FIG. 3, the UE separately detects PRSs sent by three base stations to obtain three pieces of time of signal arrival, selects one of the base stations as a reference base station (for example, a serving base station such as a base station 1 may be selected as the reference base station), and subtracts time of signal arrival corresponding to other base stations (for example, a base station 2 and a base station 3) other than the reference base station from time of signal arrival of the reference base station, to obtain two time differences of arrival TDOAs. A distance difference corresponding to each time difference may form a hyperbolic curve that uses a corresponding base station as a focus, and position information of the UE may be estimated by using intersection points of at least two hyperbolic curves.

In the DL-AOD algorithm, UE needs to measure signals sent by at least two base stations, to obtain position information. As shown in FIG. 4, the UE separately detects PRSs sent by two base stations and obtains, through detection, a group of beam-reference signal received power (Reference signal received power, RSRP) based on each base station, the UE uses an RSRP value as a signal detection result and reports the signal detection result to a location management function (Location management function, LMF) network element, and the LMF network element may calculate, based on a transmit beam directivity pattern of each base station, an angle of arrival AOD corresponding to the base station. Because the LMF network element learns of a position of each base station, the LMF network element may form, based on the angle of arrival AOD corresponding to the base station, a ray with a deflection angle of AOD by using the position of the base station as a start point, and estimate position information of the UE based on an intersection point of rays generated based on the two base stations. Alternatively, the LMF network element may send a beam RSRP value corresponding to each base station to the base station, the base station calculates an AOD based on the RSRP value and then reports the AOD to the LMF network element, and the LMF network element calculates the position information of the UE based on the AOD. The transmit beam directivity pattern of the base station may be sent by the base station to the LMF network element, or the transmit beam directivity pattern of the base station is stored or configured in the LMF network element.

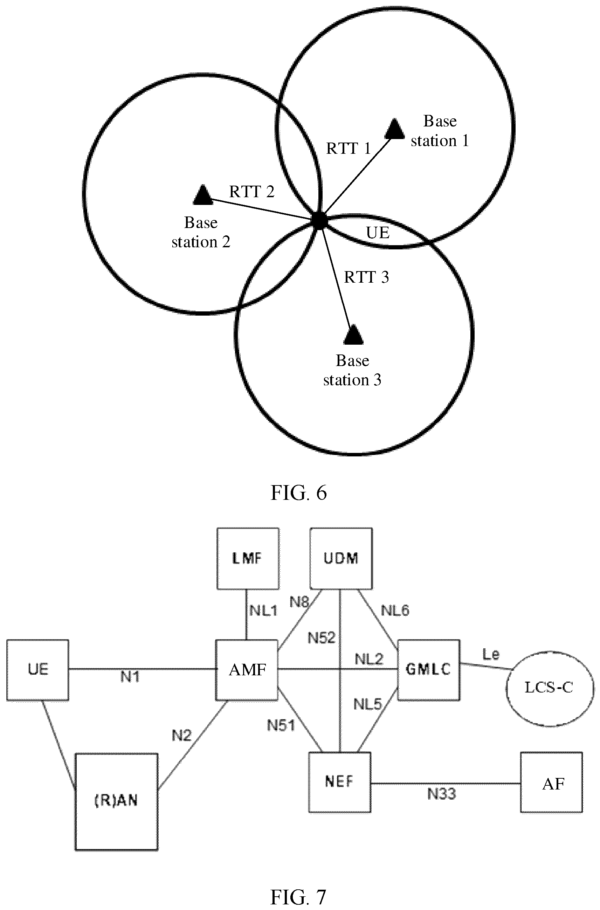

In the multi-RTT positioning algorithm, a base station needs to measure a signal sent by UE, the UE also needs to measure a signal sent by the base station, and at least two base stations are required to perform signal measurement. FIG. 5 shows a diagram of interaction of round-trip time measurement between the base station and the UE. First, the base station sends a signal to the UE, time at which the signal is sent is denoted as T1, and time at which the UE receives the signal is denoted as T2. Then, the UE sends a signal to the base station, time at which the signal is sent is denoted as T3, and time at which the base station receives the signal is denoted as T4. Then, the base station obtains a receive-send time difference of signals: T_B = T4 - T1, and reports the receive-send time difference to an LMF network element. The UE obtains a receive-send time difference of signals: T_UE = T2 - T3, and also reports the receive-send time difference to the LMF network element. The LMF network element may obtain a round-trip time of signal propagation RTT = T_B + T_UE, so that the LMF network element may obtain, through conversion, a distance between the base station and the UE based on a relationship between a distance, time, and a speed of light. For example, as shown in FIG. 6, the LMF network element may obtain a circle based on a measured RTT value and by using a position of each base station as a center of the circle. A radius of the circle is a distance that is between the base station and the UE and that is obtained based on the RTT value. Three circles are obtained based on three RTT values, and position information of the UE may be estimated based on intersections of the three circles.

Currently, in an NR protocol, a positioning reference system selected for position information may be a global coordinate system (Global Coordinate System, GCS) or a local coordinate system (LCS).

The GCS generally refers to a positioning reference system in which there are a plurality of base stations and terminals. The GCS may be defined based on a geodetic coordinate system of a world geodetic system (WGS 84), so that position information of a target apparatus may be represented by using a coordinate value based on the WGS 84 system. An origin of the WGS 84 coordinate system is a geometric center of a WGS 84 ellipsoid (for example, the earth is used as a model), and the ellipsoid is formed by rotating an ellipse around a minor axis in a north-south direction. A rotation axis is a polar axis of the ellipsoid, and a plane that is orthogonal to the ellipsoid and that includes a symmetric center is an equatorial plane.

In addition, based on different coordinate system selection manners, coordinate axes may be different. Therefore, corresponding position information may be expressed in different manners. For example, based on a Cartesian coordinate system, an x-axis may be in a due east direction by default, a y-axis may be in a due north direction by default, and a z-axis may be perpendicular to an x-y plane, which complies with a right-hand screw law. In this case, a coordinate form of position information is presented in a Cartesian coordinate system form, and the position information may be expressed as (x, y, z).

A coordinate system of the local coordinate system LCS may use a center of a reference object as an origin of coordinates. When an operation such as rotation or translation is performed on the reference object, a corresponding rotation or translation operation is also performed on the local coordinate system. In this case, position information that is of a target object and that is obtained based on the local coordinate system LCS is essentially a position of the target object relative to the reference object (corresponding to the origin of coordinates). Therefore, there is a conversion relationship between the local coordinate system LCS and the global coordinate system GCS, and position coordinates that are of a target apparatus and that are based on the global coordinate system GCS may be obtained based on the conversion relationship between the LCS and the GCS and position coordinates that are of the target apparatus and that are based on the local coordinate system LCS. In other words, an absolute position that is of the target apparatus and that is based on the global coordinate system GCS is obtained.

As shown in FIG. 1, mutual detection between terminal devices is implemented based on communication transmission between vehicles, between a vehicle and a mobile terminal/smartphone, or between a vehicle and a roadside unit RSU, so that SL positioning can be implemented, and position information of a target terminal device can be obtained. An SL positioning manner may mainly include absolute positioning and relative positioning. In the absolute positioning, position information of a target terminal may be obtained in the foregoing base station-based positioning manner. However, in the relative positioning, only relative position information between terminals needs to be obtained. For example, relative position information of a target terminal may be obtained based on the local coordinate system, or the relative position information of the target terminal is represented by using a relative distance and an angle.

Currently, the NR protocol does not define content such as a position expression manner of a relative position and a coordinate system selection manner in SL positioning. In this application, at least one rule such as coordinate system selection, selection of an origin of coordinates, a position information expression manner, or a corresponding positioning procedure in a relative positioning manner in SL positioning is defined, to provide a relative position determining method in which relative position information of a target terminal is determined through an SL link, thereby improving SL positioning efficiency.

Embodiments of this application may be applied to the communication system shown in FIG. 1, and may be further applied to a communication system shown in FIG. 7. For example, FIG. 7 shows an interaction relationship between network functions (network function, NF) and entities and corresponding interfaces by using a network service architecture of a 5G mobile communication system as an example.

Network functions and entities included in a service-based network architecture of a 5G system mainly include a terminal device, an access network (access network, AN) or a radio access network (radio access network, RAN), an access and mobility management function (access and mobility management function, AMF), a location management function (location management function, LMF), a location service client (Location Service-Client, LCS-C), a unified data management (unified data management, UDM), an application function (application function, AF), a network exposure function (network exposure function, NEF), a gateway mobile location center (Gateway Mobile Location Center, GMLC), and the like.

(R)AN: The (R)AN may be an AN, or may be a RAN. Specifically, the RAN may be radio access network devices in various forms, for example, a base station, a macro base station, a micro base station, a distributed unit-control unit (distributed unit-control unit, DU-CU), and the like. In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, quality of service management, data compression and encryption, and the like on an air interface side.

The AMF is mainly responsible for processing a control plane message, and user mobility management, including mobility status management, temporary user identity allocation, and user authentication and authorization, for example, access control, mobility management, registration and deregistration, and network element selection.

The UDM is mainly used for authentication credit processing, subscription data management, user identity processing, access authorization, registration/mobility management, subscription management, short message service management, and the like. For example, when subscription data of a user is modified, the UDM is responsible for notifying a corresponding network element.

The NEF is mainly used to provide corresponding security assurance to ensure security of an external application to a communication network, and provide functions such as QoS customization capability exposure of the external application, mobility status event subscription, and AF request distribution.

The AF is mainly used to send, to a network side, data routing information affected by an application, and perform policy control and the like by interacting with a policy framework via a network exposure function network element.

The LMF is mainly used to calculate/estimate position information of a target terminal based on a positioning measurement result collected by UE or the (R)AN, and manage coordination and scheduling of a positioning resource.

The GMLC is mainly used to provide a manner of accessing a location service and charging through an external/internal AF or a client.

The LCS-C is mainly used to implement a location service function, and provide position information of a target terminal for an external application or a user.

It should be noted that FIG. 7 is merely an example of a network service architecture. Communication methods provided in embodiments of this application may be further applied to another network architecture. For example, the communication methods in embodiments of this application may be further applied to a network architecture of a 4th generation (4th-Generation, 4G) mobile communication system or another mobile communication system developed after the 5th generation. This is not limited in embodiments of this application.

In addition, the communication apparatus in FIG. 1 or FIG. 7 may be a functional module in a device, may be a network element in a hardware device, for example, a communication chip in a mobile phone, may be a software function running on dedicated hardware, or may be a virtualization function instantiated on a platform (for example, a cloud platform).

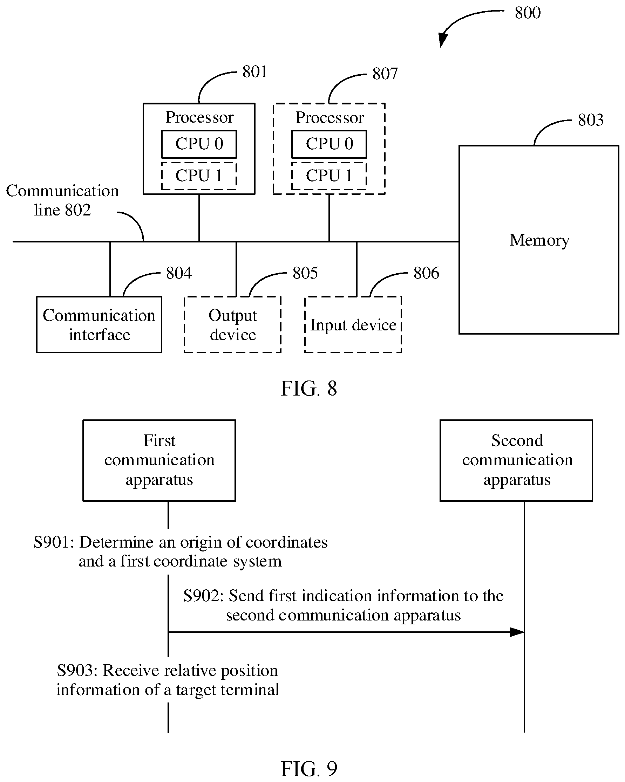

The communication apparatus in FIG. 1 or FIG. 7 may be implemented by using a communication apparatus 800 in FIG. 8. FIG. 8 shows a diagram of a hardware structure of a communication apparatus applicable to embodiments of this application. The communication apparatus 800 includes at least one processor 801, a communication line 802, a memory 803, and at least one communication interface 804.

The processor 801 may be a general-purpose central processing unit (central processing unit, CPU), a microprocessor, an application-specific integrated circuit (application-specific integrated circuit, ASIC), or one or more integrated circuits configured to control program execution of solutions of this application.

The communication line 802 may include a path through which information is transferred between the foregoing components, for example, a bus.

The communication interface 804 is configured to communicate with another device or a communication network by using any apparatus such as a transceiver, for example, an Ethernet interface, a RAN interface, or a wireless local area network (wireless local area network, WLAN) interface.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of instructions or a data structure and that can be accessed by a computer, but is not limited thereto. The memory may exist independently, and is connected to the processor through the communication line 802. Alternatively, the memory may be integrated with the processor. The memory provided in embodiments of this application may be usually non-volatile. The memory 803 is configured to store computer-executable instructions for performing the solutions of this application, and the processor 801 controls execution of the computer-executable instructions. The processor 801 is configured to execute the computer-executable instructions stored in the memory 803, to implement the methods provided in embodiments of this application.

Optionally, the computer-executable instructions in embodiments of this application may also be referred to as application program code. This is not specifically limited in embodiments of this application.

During specific implementation, in an embodiment, the processor 801 may include one or more CPUs such as a CPU 0 and a CPU 1 in FIG. 8.

During specific implementation, in an embodiment, the communication apparatus 800 may include a plurality of processors, for example, the processor 801 and a processor 807 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 800 may further include an output device 805 and an input device 806. The output device 805 communicates with the processor 801, and may display information in a plurality of manners. For example, the output device 805 may be a liquid crystal display (liquid crystal display, LCD), a light emitting diode (light emitting diode, LED) display device, a cathode ray tube (cathode ray tube, CRT) display device, a projector (projector), or the like. The input device 806 communicates with the processor 801, and may receive input of a user in a plurality of manners. For example, the input device 806 may be a mouse, a keyboard, a touchscreen device, or a sensor device.

The foregoing communication apparatus 800 may be a general-purpose device or a dedicated device. During specific implementation, the communication apparatus 800 may be a portable computer, a network server, a palmtop computer (personal digital assistant, PDA), a mobile phone, a tablet computer, a wireless terminal, an embedded device, or a device having a structure similar to that in FIG. 8. A type of the communication apparatus 800 is not limited in embodiments of this application.

The following describes in detail communication methods provided in embodiments of this application.

This application provides a relative position determining method, applied to a scenario in which a first communication apparatus requests to determine relative position information of a target terminal. The first communication apparatus may be a communication apparatus that requests positioning, and may be specifically a terminal device or a network device such as a location service client LCS-C. A second communication apparatus is configured to interact with the first communication apparatus, to determine the relative position information of the target terminal. As shown in FIG. 9, the method may include the following steps:
S901: The first communication apparatus determines an origin of coordinates and a first coordinate system.

This application provides a manner of flexibly selecting a coordinate system and an origin of coordinates in an SL relative positioning manner, and establishing a Cartesian coordinate system based on the selected origin of coordinates. The first communication apparatus that requests positioning may select an appropriate origin of coordinates or coordinate system based on a (pre-) configuration or a real-time positioning requirement, and further determine a position information expression manner of a relative position of the target terminal based on the selected origin of coordinates and the first coordinate system.

In an implementation, the position information expression manner of the relative position includes a coordinate difference between the target terminal and the origin of coordinates, or includes a relative distance between the target terminal and the origin of coordinates, and the relative distance includes at least one of the following information: a relative distance value, information about at least one azimuth, and a tilt angle corresponding to the at least one azimuth between the target terminal and the origin of coordinates.

In an implementation, the position information expression manner of the relative position may be a coordinate difference. For example, if an origin of coordinates (0, 0, 0) is determined, it is determined, based on the selected first coordinate system, that a coordinate difference between the target terminal and the origin of coordinates is (x1, y1, z1). In this case, the position information expression manner of the relative position of the target terminal may be (x, y, z)=(x1, y1, z1).

In the position information expression manner based on the coordinate difference, a coordinate system establishment rule may include the following aspects: (1) a dimension of a coordinate system, (2) selection of an origin of coordinates, (3) selection of a coordinate axis, and (4) an expression manner and a unit of a coordinate value. The following describes several possible coordinate system establishment manners based on the four aspects.
1. Dimension of a coordinate system: It may be determined, based on a positioning requirement, that the dimension of the coordinate system is a one-dimensional, two-dimensional, or three-dimensional coordinate system.
   For example, the first coordinate system may be a one-dimensional coordinate system, a two-dimensional coordinate system, or a three-dimensional coordinate system.
2. Selection of an origin of coordinates:
   In an implementation, the origin of coordinates determined by the first communication apparatus may be a position of a first terminal, a second terminal, a specific reference terminal, a network device, or a specific reference point.
3. Selection of a coordinate axis: A direction of a coordinate axis of a corresponding dimension is determined based on a dimension of a coordinate system.

In an implementation, a primary coordinate axis (for example, an x-axis) of the first coordinate system may be in a due north direction or a due east direction based on a WGS 84 geodetic coordinate system, or may be in a preset direction that is preconfigured, or the like. The preset direction may be a due north direction, a due east direction, a due south direction, a due west direction, or a direction that forms a specific included angle with the due north direction, or may be a movement direction, a direction that forms a specific included angle with a movement direction, projection of a movement direction on a horizontal plane, or projection of a movement direction on a vertical plane.

Alternatively, in another implementation, a primary coordinate axis (for example, an x-axis) of the first coordinate system may be in a movement direction of the first terminal or the second terminal, a current device orientation of the first communication apparatus, an orientation of a housing or a screen of a device, or the like.

4. Expression manner and unit of a coordinate value: An expression manner of a coordinate difference of a corresponding dimension and a unit of the coordinate difference are determined based on a dimension of a coordinate system. For example, the unit of the coordinate difference may be a unit of distance, for example, meters, decimeters, centimeters, or feet; or the coordinate difference may be represented by using longitude and latitude values, for example, a unit may be arc seconds. Specifically, different units of coordinate values may be configured based on different precision requirements.

For example, if the first communication apparatus selects a one-dimensional coordinate system as the coordinate system, it is determined that the primary coordinate axis (for example, an x-axis) of the first coordinate system may be in the due north direction or the due east direction based on the WGS 84 geodetic coordinate system, may be in the preset direction that is preconfigured, or may be in the movement direction of the first terminal or the second terminal. In this case, the relative position information may be expressed in the following manner: (x)=(x1).

For example, if the first communication apparatus selects a two-dimensional coordinate system as the coordinate system, it is determined that the primary coordinate axis (for example, an x-axis) of the first coordinate system may be in the due north direction based on the WGS 84 geodetic coordinate system, and a secondary coordinate axis (for example, a y-axis) of the first coordinate system may be in the due east direction based on the WGS 84 geodetic coordinate system. In this case, the relative position information may be expressed in the following manner: (x, y)=(x1, y1).

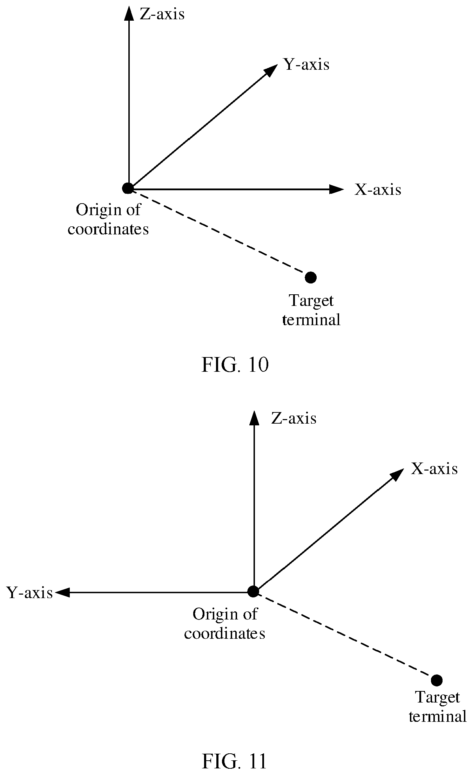

For example, if the first communication apparatus selects a three-dimensional coordinate system as the coordinate system, it is determined that the primary coordinate axis (for example, an x-axis) of the first coordinate system may be in the due east direction based on the WGS 84 geodetic coordinate system, a secondary coordinate axis 1 (for example, a y-axis) of the first coordinate system may be in the due north direction based on the WGS 84 geodetic coordinate system, and a secondary coordinate axis 2 (for example, a z-axis) of the first coordinate system may be in an upward direction perpendicular to an x-y plane, as shown in FIG. 10. Alternatively, as shown in FIG. 11, an x-axis is in a due north direction, a y-axis is in a due west direction, and a z-axis is in an upward direction on a horizontal plane. In this case, the relative position information may be expressed in the following manner: (x, y, z)=(x1, y1, z1).

In another implementation, the relative position information may alternatively be represented by using a ranging result. For example, the relative position information is represented by using a relative distance and an angle of direction, where the angle of direction is an included angle corresponding to at least one coordinate axis of the selected first coordinate system. For example, if the origin of coordinates is determined, a straight-line distance between the target terminal and the origin of coordinates and an angle of direction between the at least one coordinate axis of the first coordinate system and a connection line between the target terminal and the origin of coordinates are determined based on the selected first coordinate system. In this case, the relative position information may be represented by using (distance d, angle of direction).

In the relative position information expression manner based on the distance and the angle of direction, a coordinate system establishment rule may include the following aspects: (1) a dimension of a coordinate system, (2) selection of an origin of coordinates, (3) selection of a coordinate axis, and (4) selection of an angle of direction. The following describes several possible coordinate system establishment manners based on the four aspects. A dimension of the first coordinate system may be one-dimensional, two-dimensional, or three-dimensional. For a selection manner of a coordinate axis, refer to the foregoing descriptions. Details are not described herein again. A corresponding relative position information expression manner may be determined by using a distance and at least one angle of direction.

For example, a primary coordinate axis (for example, an x-axis) of the first coordinate system selected by the first communication apparatus may be in a due north direction or a due east direction based on a WGS 84 geodetic coordinate system, may be in a preset direction that is preconfigured, or may be in a movement direction of a first terminal or a second terminal. The preset direction may be a due south direction, a due west direction, or a direction that forms a specific included angle with a due north direction, or may be a movement direction, a direction that forms a specific included angle with a movement direction, projection of a movement direction on a horizontal plane, or projection of a movement direction on a vertical plane.

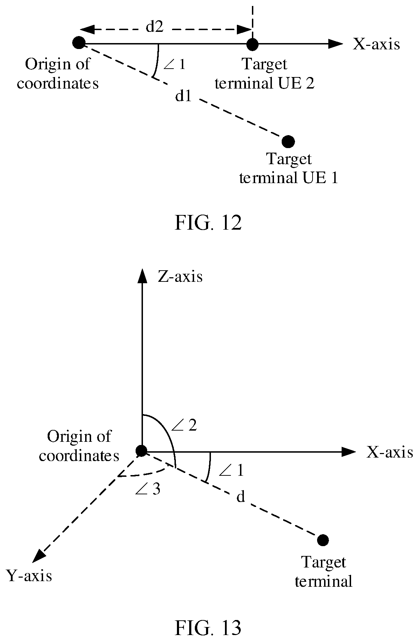

The relative position information may be expressed in the following manner: (d+angle of direction), where d may represent a straight-line distance between the target terminal and the origin of coordinates. In an example shown in FIG. 12, the angle of direction may be an included angle between an x-axis and a connection line between the target terminal and the origin of coordinates, for example, ∠1.

In an implementation, the angle of direction may be defined as an angle by which the connection line between the target terminal and the origin of coordinates rotates in a clockwise direction by using the x-axis as a rotation axis, or an angle by which the connection line between the target terminal and the origin of coordinates rotates in a counterclockwise direction by using as the x-axis a rotation axis. In this case, a value range of the angle of direction may be 0° to 360°. Alternatively, a value range of the angle of direction is defined as 0° to 180°, and the angle of direction may be defined as: if an angle by which the connection line between the target terminal and the origin of coordinates rotates in a clockwise direction by using the x axis as a rotation axis is less than or equal to 180°, the angle of direction is a positive value; or if an angle by which the connection line between the target terminal and the origin of coordinates rotates in a clockwise direction by using the x axis as a rotation axis is greater than 180°, the angle of direction is a difference obtained by subtracting the angle of rotation from 180°, that is, the angle of direction may be represented by using a negative value.

For example, if the first communication apparatus selects a one-dimensional coordinate system as the coordinate system, as shown in FIG. 12, the coordinate axis x-axis is in a due east direction, a relative distance between a target terminal UE 1 and the origin of coordinates is d1, and an included angle between the x-axis and a connection line between the UE 1 and the origin of coordinates is ∠1, relative position information of the target terminal UE 1 may be expressed in the following manner: (d1, ∠1). In an implementation, if a position of a target terminal is on a selected primary coordinate axis x, for example, UE 2 shown in FIG. 12, that is, there is no included angle between the x axis and a connection line between the target terminal and the origin of coordinates, or an included angle is 0°, relative position information of the UE 2 may be expressed in the following manner: (d2) or (d2, 0).

For example, if the first communication apparatus selects a two-dimensional coordinate system as the coordinate system, a primary coordinate axis (for example, an x-axis) of the first coordinate system may be in the due east direction based on the WGS 84 geodetic coordinate system, and a secondary coordinate axis (for example, a z-axis) may be in an upward direction on a horizontal plane. As shown in FIG. 13, a straight-line distance between the target terminal and the origin of coordinates is d, an included angle between the x-axis and a connection line between the target terminal and the origin of coordinates may be an angle of direction between the target terminal and the x-axis, that is, ∠1, and an included angle between the z-axis and the connection line between the target terminal and the origin of coordinates may be an angle of direction between the target terminal and the z-axis, that is, ∠2. As shown in FIG. 13, relative position information of the target terminal may be expressed in the following manner: (d, ∠1, ∠2). Particularly, if a target terminal is on an x-z plane, ∠1 + ∠2 = 90°, and an expression manner of the target terminal may be simplified as (d, ∠1) or (d, ∠2).

Similarly, if the first communication apparatus selects a three-dimensional coordinate system as the coordinate system, as shown in FIG. 13, an x-axis of the first coordinate system may be in the due east direction based on the WGS 84 geodetic coordinate system, a y-axis is in the due south direction, a z-axis is in an upward direction on a horizontal plane, and a straight-line distance between the target terminal and the origin of coordinates is d, relative position information of the target terminal may be expressed in the following manner: (distance d, angle 1 of direction, angle 2 of direction). At least one angle of direction may be represented by using an included angle between the x-axis and the connection line between the target terminal and the origin of coordinates, an included angle between the y-axis and the connection line between the target terminal and the origin of coordinates (as shown by ∠3 in FIG. 13), or an included angle between the z-axis and the connection line between the target terminal and the origin of coordinates.

In addition, in an implementation, the origin of coordinates and/or the coordinate system determined by the first communication apparatus may be configured, or may be changed based on an actual positioning requirement. For example, the primary coordinate axis initially determined by the first communication apparatus may be in a due north direction, and when positioning measurement is subsequently performed, the first communication apparatus may determine, based on a change status of a position of the first communication apparatus or a change status of a position of the target terminal, to update the primary coordinate axis to be in a movement direction of a center point of the first communication apparatus. This is not specifically limited in this application.

S902: The first communication apparatus sends first indication information to the second communication apparatus.

The first indication information may indicate at least one of the origin of coordinates, the first coordinate system, and a position information expression manner. For example, the first communication apparatus or the second communication apparatus may preconfigure a selection manner of an origin of coordinates or a coordinate system. For example, if the second communication apparatus is preconfigured with the selection manner of the origin of coordinates, the second communication apparatus may determine a relative position information expression manner and the like based on information that is about the first coordinate system and that is included in the first indication information and information about the preconfigured origin of coordinates.

In an implementation, the first indication information may further include a position information expression manner of a relative position, and indicate, to the second communication apparatus, which position information expression manner used to feed back the relative position information of the target terminal to the first communication apparatus.

In an implementation, the first indication information may further include a conversion relationship between the first coordinate system and a global coordinate system GCS. Therefore, the second communication apparatus may obtain conversion between relative position information and absolute position information based on the conversion relationship. For example, the second communication apparatus may obtain, based on absolute position information of the global coordinate system GCS and the conversion relationship, relative position information corresponding to the first coordinate system. On the contrary, the second communication apparatus may further obtain, based on the conversion relationship and relative position information obtained based on the first coordinate system, absolute position information based on the global coordinate system GCS.

Correspondingly, the second communication apparatus receives the first indication information from the first communication apparatus, and determines, based on the first indication information (and/or based on preconfigured information), the corresponding origin of coordinates, the first coordinate system, the relative position information expression manner, and the like for positioning the target terminal.

Subsequently, the second communication apparatus may trigger positioning measurement on the target terminal, to obtain a measurement result for relative position information calculation. The second communication apparatus may interact with the target terminal to complete positioning measurement, or the second communication apparatus may trigger another network device to perform signaling interaction with the target terminal, to complete positioning measurement. A positioning measurement procedure and a relative position information calculation procedure are not specifically limited in this application.

S903: The first communication apparatus receives the relative position information of the target terminal.

In an implementation, the first communication apparatus receives the relative position information of the target terminal, where the relative position information is correspondingly generated based on the origin of coordinates and the first coordinate system that are determined by the first communication apparatus in step S901, and the relative position information reflects a position, in the specific first coordinate system, of the target terminal relative to a position of the origin of coordinates. For example, if the origin of coordinates is in a position of a central point of the first terminal, and the target terminal is the second terminal, the relative position information of the target terminal indicates a position of the second terminal relative to the first terminal.

In the foregoing implementation, selection of an origin of coordinates, a coordinate system, a corresponding position information expression manner, and the like in SL relative positioning is defined, so that a receiver or a communication apparatus that performs positioning measurement may perform positioning measurement and calculation in a specified positioning manner, to obtain relative position information corresponding to the specified positioning manner, thereby specifying a rule of performing relative positioning through a sidelink, and improving communication efficiency of sidelink positioning.

The following describes several positioning procedures with reference to possible implementation scenarios in embodiments of this application. The following several positioning procedures are merely used as examples of this application, and do not limit an SL relative positioning procedure.

Based on different location request initiators, a location request service may include a terminal originated location request (Mobile Originated Location Request, MO-LR) and a terminal terminated location request (Mobile Terminated Location Request, MT-LR). The MO-LR is a location request directly initiated by a terminal device to a positioning management system through an air interface. The MT-LR is a location request initiated by a location service client LCS-C. This method provides a passive query mechanism for a located party.

For example, in Embodiment 1, the first communication apparatus may be the first terminal or the network device, the second communication apparatus may be the second terminal, and the target terminal is the second terminal. The first terminal may indicate, to the second terminal through the first indication information, a positioning manner specified for requesting to obtain a relative position, and the positioning manner may include at least one of information such as a coordinate system, an origin of coordinates, or a relative position information expression manner. In other words, the first terminal may initiate a relative location request to the second terminal, and the second terminal performs positioning measurement and completes positioning calculation, to obtain the relative position information of the second terminal.

In this implementation, the first indication information may be carried in location request information, or may be separately sent to the second terminal. For example, in the following embodiments of this application, an example in which the first indication information is carried in a location request is used. This does not constitute a limitation on this application.

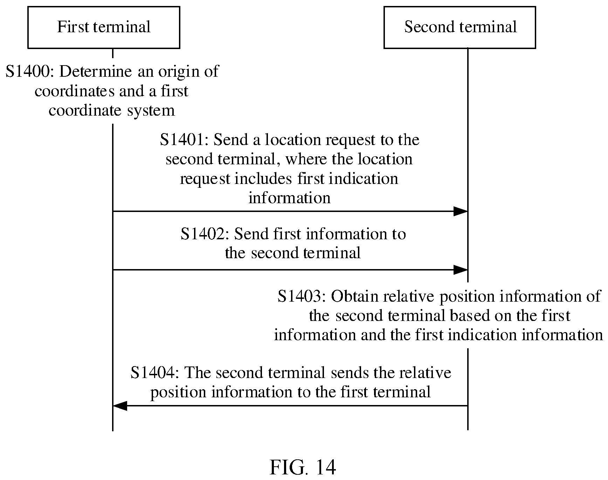

As shown in FIG. 14, an example in which the first communication apparatus is the first terminal and the second communication apparatus is the second terminal is used. The method may include the following steps:
S1400: The first terminal determines an origin of coordinates and a first coordinate system.
S1401: The first terminal sends a location request to the second terminal, where the location request includes the first indication information.

For example, the location request may be specifically an MO-LR. To be specific, the first terminal may send the MO-LR to the second terminal, to request the second terminal to perform SL relative positioning, to obtain relative position information of the second terminal.

The location request includes the first indication information that indicates at least one of the origin of coordinates, the first coordinate system, a position information expression manner, a conversion relationship between the first coordinate system and a global coordinate system, or the like.

For related descriptions of content that may be indicated by the first indication information, refer to the foregoing steps S901 and S902. Details are not described herein again.

S1402: The first terminal sends first information to the second terminal.

For example, the first information may be used by the second terminal to perform positioning measurement based on the received information, to obtain a measurement result.

In an implementation, the first information may be specifically a reference signal such as a positioning reference signal PRS, the first information may be carried in a positioning reference signal PRS, or the first information may be carried in other signaling or another channel such as sidelink control signaling (Sidelink Control Information, SCI) or a physical sidelink control channel (Physical Sidelink Control Channel, PSSCH), and the first information is for measurement and indication of SL positioning. Second information, third information, or fourth information in the following is similar to the first information. Details are not described subsequently. An interaction manner of positioning measurement is not limited in this application.

S1403: The second terminal obtains the relative position information of the second terminal based on the first information and the first indication information.

Correspondingly, the second terminal receives the first indication information, and determines a positioning manner specified for relative positioning measurement, including the origin of coordinates, the first coordinate system, the relative position information expression manner, and the like. Then, the second terminal may perform calculation based on the received first reference information that is used as a measurement result of relative positioning, to obtain the relative position information that is of the second terminal and that corresponds to the specified positioning manner.

In an implementation, for a specific algorithm for calculating relative position information, refer to a conventional relative positioning-related algorithm. A specific manner of calculating the relative position information is not limited in embodiments of this application. For example, a positioning calculation manner using time of arrival (Time of Arrival, TOA) of information and an angle of departure AOD may be used. Specifically, when the first terminal is synchronized with the second terminal, a curve (2D) or a sphere (3D) that uses the first terminal as an origin may be determined based on time of arrival of the first reference information. In this case, measurement on an angle of arrival corresponding to the first terminal may be added, and the corresponding angle of arrival AOD may be obtained based on a transmit beam direction of the first terminal. In this way, a unique point, namely, a relative position of the second terminal, may be determined on the foregoing obtained curve or sphere based on the angle of arrival AOD.

S1404: The second terminal sends the relative position information to the first terminal.

The second terminal may send the obtained relative position information to the first terminal in the position information expression manner specified by the first terminal.

For example, in Embodiment 2, the first communication apparatus may be the first terminal, the target terminal may be the second terminal, and the second communication apparatus may be the network device, such as a location management function LMF network element, an access and mobility management function AMF, or a gateway mobile location center GMLC network element in a core network device 5GC. In this implementation, the first indication information may be carried in location request information, or may be separately sent to the network device. In other words, the first terminal may initiate, to the network device, a request for locating the second terminal, the first terminal initiates positioning measurement on the second terminal, and the network device performs positioning calculation, to obtain relative position information of the second terminal.

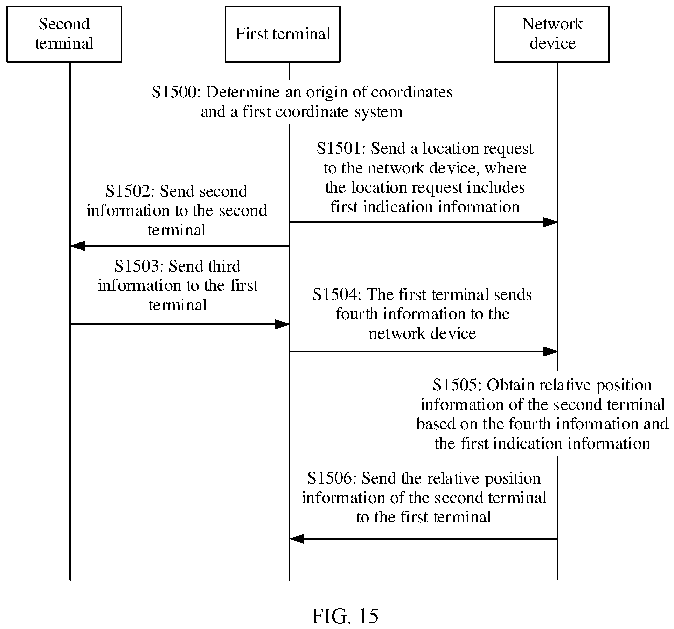

As shown in FIG. 15, the method may include the following steps:
S1500: The first terminal determines an origin of coordinates and a first coordinate system.
S1501: The first terminal sends a location request to the network device, where the location request includes the first indication information.

The location request indicates to obtain the relative position information of the second terminal. For example, the location request may be specifically an MO-LR. To be specific, the first terminal may send the MO-LR to the network device, to request the 5GC to perform SL relative positioning on the second terminal, to obtain the relative position information of the second terminal.

In an implementation, the location request may include the first indication information that indicates at least one of the origin of coordinates, the first coordinate system, a position information expression manner, a conversion relationship between the first coordinate system and a global coordinate system, or the like.

It should be noted that the first terminal needs to transparently transmit the location request to the 5GC through an access network device. Therefore, the network device in step S1501 may alternatively be an access network device connected to the first terminal, for example, a RAN.

For related descriptions of content that may be indicated by the first indication information, refer to the foregoing steps S901 and S902. Details are not described herein again.

S1502: The first terminal sends second information to the second terminal.

For example, the second information may be used by the second terminal to perform measurement based on the received information.

S1503: The second terminal sends third information to the first terminal.

Correspondingly, the second terminal receives the second information from the first terminal, obtains the third information based on the second information, and feeds back the third information to the first terminal.

S1504: The first terminal sends fourth information to the network device.

Correspondingly, the first terminal receives the third information from the second terminal, and obtains the fourth information based on the third information.

In an implementation, the fourth information may be a measurement result obtained by the first terminal based on the third information, and the fourth information is used by the network device to obtain the relative position information of the second terminal based on the first indication information.

For example, if the network device is an LMF network element, that the first terminal sends the fourth information to the network device specifically includes: The first terminal sends the fourth information to an AMF network element, and then the AMF network element sends the fourth information to the LMF network element.

S1505: The network device obtains the relative position information of the second terminal based on the fourth information and the first indication information.

In an implementation, the network device determines, based on the first indication information, a positioning manner specified for relative positioning measurement, including the origin of coordinates, the first coordinate system, the relative position information expression manner, and the like. Then, the network device may perform calculation based on the measurement result obtained by exchanging information used for positioning between the first terminal and the second terminal, to obtain the relative position information of the second terminal corresponding to the specified positioning manner.

S1506: The network device sends the relative position information of the second terminal to the first terminal.

The network device may send the obtained relative position information of the second terminal to the first terminal in the position information expression manner specified by the first terminal.

For example, if the network device is an LMF network element, after the LMF network element performs calculation based on the measurement result to obtain the relative position information of the second terminal, the LMF network element sends the relative position information of the second terminal to an AMF network element, and then the AMF network element sends the relative position information of the second terminal to the first terminal.

For example, in Embodiment 3, the first communication apparatus may be a location service client LCS-C, and the second communication apparatus may be the network device. The network device may be specifically an access network device, or may be a location management function LMF network element, an access and mobility management function AMF, or a gateway mobile location center GMLC network element in a core network device 5GC.

In this implementation, the first indication information may be carried in location request information for sending, or may be sent by the LCS-C to the network device. In other words, the LCS-C may initiate, to the network device, a request for locating the second terminal, the first terminal initiates positioning measurement on the second terminal, and the LCS-C performs positioning calculation, to obtain relative position information of the second terminal.

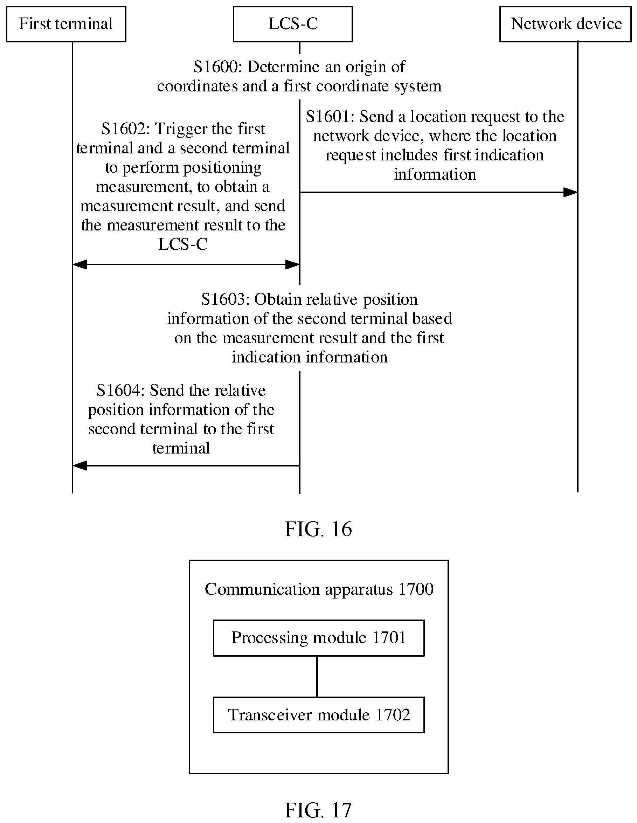

As shown in FIG. 16, the method may include the following steps:
S1600: The LCS-C determines an origin of coordinates and a first coordinate system.
S1601: The LCS-C sends a location request to the network device, where the location request includes the first indication information.

The location request indicates the network device to obtain the relative position information of the second terminal. For example, the location request may be specifically an MT-LR. To be specific, the LCS-C may send the MT-LR to the network device, to request the 5GC to perform SL relative positioning on the second terminal, to obtain the relative position information of the second terminal.

In an implementation, the location request may include the first indication information that indicates at least one of the origin of coordinates, the first coordinate system, a position information expression manner, a conversion relationship between the first coordinate system and a global coordinate system, or the like.

It should be noted that the LCS-C needs to transparently transmit the location request to the 5GC through an access network device. Therefore, the network device in step S1601 may alternatively be an access network device connected to the first terminal, for example, a RAN.

For related descriptions of content that may be indicated by the first indication information, refer to the foregoing steps S901 and S902. Details are not described herein again.

For example, if the network device is an LMF network element, that the LCS-C sends the location request to the network device specifically includes: The LCS-C sends the location request to a GMLC network element, the GMLC network element sends the location request to an AMF network element, and then the AMF network element sends the location request to the LMF network element.

S1602: The network device triggers the first terminal and the second terminal to perform positioning measurement, to obtain a measurement result, and sends the measurement result to the LCS-C.

In an implementation, a positioning measurement process includes: The network device sends a measurement signal to the first terminal, the first terminal sends the received measurement signal to the second terminal, then the second terminal sends the received measurement signal to the network device, and the network device may obtain the measurement result based on the received measurement signal and send the measurement result to the LCS-C. The measurement result is used by the LCS-C to calculate the relative position information of the second terminal.

S1603: The LCS-C obtains the relative position information of the second terminal based on the measurement result and the first indication information.

In an implementation, the LCS-C determines, based on the first indication information, a positioning manner specified for relative positioning measurement, including the origin of coordinates, the first coordinate system, the relative position information expression manner, and the like. Then, the LCS-C may perform calculation based on the measurement result obtained by exchanging information used for positioning between the first terminal and the second terminal, to obtain the relative position information of the second terminal corresponding to the specified positioning manner.

S1604: The LCS-C sends the relative position information of the second terminal to the first terminal.

The LCS-C may send the obtained relative position information of the second terminal to the first terminal in the position information expression manner specified by the first terminal.

For example, after the LCS-C performs calculation based on the measurement result to obtain the relative position information of the second terminal, the LCS-C sends the relative position information of the second terminal to a GMLC network element, the GMLC network element sends the relative position information of the second terminal to an AMF network element, and then the AMF network element sends the relative position information of the second terminal to the first terminal.

In the foregoing several implementations, possible implementation procedures of an SL relative positioning manner are provided as examples. Selection of a specified coordinate system or selection of an origin of coordinates is indicated in a positioning procedure, so that a communication apparatus that implements positioning measurement and positioning calculation may obtain corresponding relative position information based on a specified positioning manner, and feed back the relative position information, thereby improving SL positioning efficiency.

Based on the foregoing embodiments, this application further provides a communication apparatus, configured to implement steps performed by the first communication apparatus in the foregoing embodiments. As shown in FIG. 17, a communication apparatus 1700 may include a processing module 1701 and a transceiver module 1702.

The processing module 1701 may be configured to determine an origin of coordinates and a first coordinate system.

The transceiver module 1702 may be configured to send first indication information to a second communication apparatus, where the first indication information indicates at least one of the origin of coordinates, the first coordinate system, and a position information expression manner, and a primary coordinate axis of the first coordinate system is in a preset direction or a movement direction of a first terminal or a second terminal. The transceiver module 1702 is further configured to receive relative position information of the second terminal.

In an implementation, the origin of coordinates may be a position of the first terminal, the second terminal, a reference terminal, a network device, or a specific reference point.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth.

In an implementation, the first coordinate system may include a one-dimensional coordinate system, a two-dimensional coordinate system, or a three-dimensional coordinate system.

In an implementation, the first indication information further includes a conversion relationship between the first coordinate system and a global coordinate system GCS.

In an implementation, the communication apparatus 1700 may be the first terminal or the network device, and the second communication apparatus may be the second terminal.

In an implementation, the transceiver module 1702 is further configured to send first information to the second terminal, where the first information is used by the second terminal to obtain the relative position information of the second terminal based on the first indication information.

In an implementation, the communication apparatus 1700 may be the first terminal, and the second communication apparatus is the network device.

In an implementation, the transceiver module 1702 may be further configured to: send second information to the second terminal; receive third information from the second terminal; and send fourth information to the network device, where the fourth information is obtained based on the third information, and the fourth information is used by the network device to obtain the relative position information of the second terminal based on the first indication information.

In an implementation, the communication apparatus 1700 may be a positioning client, the second communication apparatus is the network device, and the network device is an access network device, a location management function LMF network element, an access and mobility management function AMF, or a gateway mobile location center GMLC network element.

In an implementation, the network device is configured to: perform a positioning procedure between the first terminal and the second terminal, and feed back a measurement signal to the positioning client; and the positioning client is configured to: obtain the relative position information of the second terminal based on the measurement signal and the first indication information, and feed back the relative position information to the first terminal.

In addition, this application further provides a communication apparatus, configured to implement steps performed by the second communication apparatus in the foregoing embodiments. As shown in FIG. 17, a communication apparatus 1700 may include a processing module 1701 and a transceiver module 1702.

The transceiver module 1702 is configured to receive first indication information from a first communication apparatus, where the first indication information indicates at least one of an origin of coordinates, a first coordinate system, and a position information expression manner, and a primary coordinate axis of the first coordinate system is in a preset direction or a movement direction of a first terminal or a second terminal.

The processing module 1701 is configured to perform a positioning procedure between the first terminal and the second terminal, to obtain a measurement signal, where the measurement signal is used to calculate relative position information of the second terminal based on the first indication information.

In an implementation, the transceiver module 1702 may be further configured to receive first information from the first terminal. The processing module 1701 is further configured to obtain the relative position information of the second terminal based on the first information and the first indication information; and the transceiver module 1702 is further configured to send the relative position information to the first terminal.

In an implementation, the origin of coordinates is a position of the first terminal, a reference terminal, a specific reference point, or the second terminal.

In an implementation, the position information expression manner includes a coordinate difference between the second terminal and the origin of coordinates, or the position information expression manner includes a relative distance between the second terminal and the origin of coordinates, and the relative distance includes at least one of the following information: a relative distance value, information about at least one azimuth, and a tilt angle corresponding to the at least one azimuth.

In an implementation, the first coordinate system includes a one-dimensional coordinate system, a two-dimensional coordinate system, or a three-dimensional coordinate system.

In an implementation, the first indication information further includes a conversion relationship between the first coordinate system and a global coordinate system GCS.

In an implementation, the first communication apparatus is the first terminal or a network device, and the communication apparatus 1700 is the second terminal; the first communication apparatus is the first terminal, and the communication apparatus 1700 is a network device; or the first communication apparatus is a positioning client, and the communication apparatus 1700 is a network device, where the network device may be an access network device, a location management function LMF network element, an access and mobility management function AMF, or a gateway mobile location center GMLC network element.

In a simple embodiment, a person skilled in the art may figure out that the communication apparatus 1700 may be in a form shown in FIG. 8. For example, the processor 801 in FIG. 8 may invoke computer-executable instructions stored in the memory 803, to enable the communication apparatus 1700 to perform methods performed by network elements/communication apparatuses in the foregoing method embodiments.

For example, functions/implementation processes of the transceiver module 1702 in FIG. 17 may be implemented by the processor 801 in FIG. 8 by invoking the computer-executable instructions stored in the memory 803. Alternatively, functions/implementation processes of the processing module 1701 in FIG. 17 may be implemented by the processor 801 in FIG. 8 by invoking the computer-executable instructions stored in the memory 803, and functions/implementation processes of the transceiver module 1702 in FIG. 17 may be implemented by using the communication interface 804 in FIG. 8.

It should be noted that one or more of the foregoing modules or units may be implemented by using software, hardware, or a combination of software and hardware. When any one of the foregoing modules or units is implemented by using software, the software exists in a form of computer program instructions and is stored in a memory, and a processor may be configured to execute the program instructions to implement the foregoing method procedures. The processor may be built into a SoC (system on chip) or an ASIC, or may be an independent semiconductor chip. In addition to a core that is used to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or may perform the foregoing method procedures without relying on software.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the chip system further includes the memory. Optionally, the chip system may include a chip, or may include a chip and another discrete component. This is not specifically limited in this embodiment of this application.

Optionally, an embodiment of this application further provides a computer-readable storage medium. All or some of the procedures in the foregoing method embodiments may be completed by a computer program instructing related hardware. The program may be stored in the foregoing computer-readable storage medium, and when the program is executed, the procedures in the foregoing method embodiments may be performed. The computer-readable storage medium may be an internal storage unit of the communication apparatus in any one of the foregoing embodiments, for example, a hard disk or a memory of the communication apparatus. The computer-readable storage medium may alternatively be an external storage device of the communication apparatus, for example, a plug-in hard disk, a smart media card (smart media card, SMC), a secure digital (secure digital, SD) card, or a flash card (flash card) configured on the communication apparatus. Further, the computer-readable storage medium may include both an internal storage unit and an external storage device of the communication apparatus. The computer-readable storage medium is configured to store the computer program and other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be completed by a computer program instructing related hardware. The program may be stored in the foregoing computer program product, and when the program is executed, the procedures in the foregoing method embodiments may be performed.

Optionally, an embodiment of this application further provides computer instructions. All or some of the procedures in the foregoing method embodiments may be implemented by the computer instructions instructing related hardware (such as a computer, a processor, an access network device, a mobility management network element, or a session management network element). A program may be stored in the computer-readable storage medium or the computer program product.

Based on the foregoing descriptions of the implementations, a person skilled in the art may clearly understand that, for the purpose of convenient and brief description, division into the functional modules is merely used as an example for description. In actual application, the foregoing functions may be allocated to different functional modules for implementation based on a requirement. To be specific, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may be one physical unit or a plurality of physical units, that is, may be located in one position, or may be distributed in a plurality of different positions. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A relative position determining method, applied to a first communication apparatus, wherein the method comprises:
determining an origin of coordinates and a first coordinate system;
sending first indication information to a second communication apparatus, wherein the first indication information indicates at least one of the origin of coordinates, the first coordinate system, and a position information expression manner, and a primary coordinate axis of the first coordinate system is in a preset direction or a movement direction of a first terminal or a second terminal; and
receiving relative position information of the second terminal.

2. The method according to claim 1, wherein the origin of coordinates is a position of the first terminal, the second terminal, a reference terminal, a network device, or a specific reference point.

3. The method according to claim 1 or 2, wherein the position information expression manner comprises a coordinate difference between the second terminal and the origin of coordinates, or the position information expression manner comprises a relative distance between the second terminal and the origin of coordinates, and the relative distance comprises at least one of the following information: a relative distance value, information about at least one azimuth, and a tilt angle corresponding to the at least one azimuth.

4. The method according to any one of claims 1 to 3, wherein the first coordinate system comprises a one-dimensional coordinate system, a two-dimensional coordinate system, or a three-dimensional coordinate system.

5. The method according to any one of claims 1 to 4, wherein the first indication information further comprises a conversion relationship between the first coordinate system and a global coordinate system GCS.

6. The method according to any one of claims 1 to 5, wherein the first communication apparatus is the first terminal or the network device, and the second communication apparatus is the second terminal.

7. The method according to claim 6, wherein after the first indication information is sent to the second terminal, the method further comprises:
sending first information to the second terminal, wherein the first information is used by the second terminal to obtain the relative position information of the second terminal based on the first indication information.

8. The method according to any one of claims 1 to 5, wherein the first communication apparatus is the first terminal, and the second communication apparatus is the network device.

9. The method according to claim 8, wherein after the first indication information is sent to the network device, the method further comprises:
sending second information to the second terminal;
receiving third information from the second terminal; and
sending fourth information to the network device, wherein the fourth information is obtained based on the third information, and the fourth information is used by the network device to obtain the relative position information of the second terminal based on the first indication information.

10. The method according to any one of claims 1 to 5, wherein the first communication apparatus is a positioning client, the second communication apparatus is the network device, and the network device is an access network device, a location management function LMF network element, an access and mobility management function AMF, or a gateway mobile location center GMLC network element.

11. The method according to claim 10, wherein the network device is configured to: perform a positioning procedure between the first terminal and the second terminal, and feed back a measurement signal to the positioning client; and
the positioning client is configured to: obtain the relative position information of the second terminal based on the measurement signal and the first indication information, and feed back the relative position information to the first terminal.

12. A relative position determining method, applied to a second communication apparatus, wherein the method comprises:
receiving first indication information from a first communication apparatus, wherein the first indication information indicates at least one of an origin of coordinates, a first coordinate system, and a position information expression manner, and a primary coordinate axis of the first coordinate system is in a preset direction or a movement direction of a first terminal or a second terminal; and
performing a positioning procedure between the first terminal and the second terminal, to obtain a measurement signal, wherein the measurement signal is used to calculate relative position information of the second terminal based on the first indication information.

13. The method according to claim 12, wherein the method further comprises:
receiving first information from the first terminal;
obtaining the relative position information of the second terminal based on the first information and the first indication information; and
sending the relative position information to the first terminal.

14. The method according to claim 12 or 13, wherein the origin of coordinates is a position of the first terminal, a reference terminal, a specific reference point, or the second terminal.

15. The method according to any one of claims 12 to 14, wherein the position information expression manner comprises a coordinate difference between the second terminal and the origin of coordinates, or the position information expression manner comprises a relative distance between the second terminal and the origin of coordinates, and the relative distance comprises at least one of the following information: a relative distance value, information about at least one azimuth, and a tilt angle corresponding to the at least one azimuth.

16. The method according to any one of claims 12 to 15, wherein the first coordinate system comprises a one-dimensional coordinate system, a two-dimensional coordinate system, or a three-dimensional coordinate system.

17. The method according to any one of claims 12 to 16, wherein the first indication information further comprises a conversion relationship between the first coordinate system and a global coordinate system GCS.

18. The method according to any one of claims 12 to 17, wherein the first communication apparatus is the first terminal or a network device, and the second communication apparatus is the second terminal;
the first communication apparatus is the first terminal, and the second communication apparatus is a network device; or
the first communication apparatus is a positioning client, the second communication apparatus is a network device, and the network device is an access network device, a location management function LMF network element, an access and mobility management function AMF, or a gateway mobile location center GMLC network element.

19. A communication apparatus, wherein the communication apparatus comprises:
a processing module, configured to determine an origin of coordinates and a first coordinate system; and
a transceiver module, configured to send first indication information to a second communication apparatus, wherein the first indication information indicates at least one of the origin of coordinates, the first coordinate system, and a position information expression manner, and a primary coordinate axis of the first coordinate system is in a preset direction or a movement direction of a first terminal or a second terminal; and
the transceiver module is further configured to receive relative position information of the second terminal.

20. The apparatus according to claim 19, wherein the origin of coordinates is a position of the first terminal, the second terminal, a reference terminal, a network device, or a specific reference point.

21. The apparatus according to claim 19 or 20, wherein the position information expression manner comprises a coordinate difference between the second terminal and the origin of coordinates, or the position information expression manner comprises a relative distance between the second terminal and the origin of coordinates, and the relative distance comprises at least one of the following information: a relative distance value, information about at least one azimuth, and a tilt angle corresponding to the at least one azimuth.

22. The apparatus according to any one of claims 19 to 21, wherein the first coordinate system comprises a one-dimensional coordinate system, a two-dimensional coordinate system, or a three-dimensional coordinate system.

23. The apparatus according to any one of claims 19 to 22, wherein the first indication information further comprises a conversion relationship between the first coordinate system and a global coordinate system GCS.

24. The apparatus according to any one of claims 19 to 23, wherein the first communication apparatus is the first terminal or the network device, and the second communication apparatus is the second terminal.

25. The apparatus according to claim 24, wherein the transceiver module is further configured to send first information to the second terminal, wherein the first information is used by the second terminal to obtain the relative position information of the second terminal based on the first indication information.

26. The apparatus according to any one of claims 19 to 23, wherein the first communication apparatus is the first terminal, and the second communication apparatus is the network device.

27. The apparatus according to claim 26, wherein the transceiver module is further configured to: send second information to the second terminal; receive third information from the second terminal; and send fourth information to the network device, wherein the fourth information is obtained based on the third information, and the fourth information is used by the network device to obtain the relative position information of the second terminal based on the first indication information.

28. The apparatus according to any one of claims 19 to 23, wherein the first communication apparatus is a positioning client, the second communication apparatus is the network device, and the network device is an access network device, a location management function LMF network element, an access and mobility management function AMF, or a gateway mobile location center GMLC network element.

29. The apparatus according to claim 28, wherein the network device is configured to: perform a positioning procedure between the first terminal and the second terminal, and feed back a measurement signal to the positioning client; and the positioning client is configured to: obtain the relative position information of the second terminal based on the measurement signal and the first indication information, and feed back the relative position information to the first terminal.

30. A communication apparatus, wherein the communication apparatus comprises:
a transceiver module, configured to receive first indication information from a first communication apparatus, wherein the first indication information indicates at least one of an origin of coordinates, a first coordinate system, and a position information expression manner, and a primary coordinate axis of the first coordinate system is in a preset direction or a movement direction of a first terminal or a second terminal; and
a processing module, configured to perform a positioning procedure between the first terminal and the second terminal, to obtain a measurement signal, wherein the measurement signal is used to calculate relative position information of the second terminal based on the first indication information.

31. The apparatus according to claim 30, wherein the transceiver module is further configured to receive first information from the first terminal;
the processing module is further configured to obtain the relative position information of the second terminal based on the first signal and the first indication information; and
the transceiver module is further configured to send the relative position information to the first terminal.

32. The apparatus according to claim 30 or 31, wherein the origin of coordinates is a position of the first terminal, a reference terminal, a specific reference point, or the second terminal.

33. The apparatus according to any one of claims 30 to 32, wherein the position information expression manner comprises a coordinate difference between the second terminal and the origin of coordinates, or the position information expression manner comprises a relative distance between the second terminal and the origin of coordinates, and the relative distance comprises at least one of the following information: a relative distance value, information about at least one azimuth, and a tilt angle corresponding to the at least one azimuth.

34. The apparatus according to any one of claims 30 to 33, wherein the first coordinate system comprises a one-dimensional coordinate system, a two-dimensional coordinate system, or a three-dimensional coordinate system.

35. The apparatus according to any one of claims 30 to 34, wherein the first indication information further comprises a conversion relationship between the first coordinate system and a global coordinate system GCS.

36. The apparatus according to any one of claims 30 to 35, wherein the first communication apparatus is the first terminal or a network device, and the second communication apparatus is the second terminal; the first communication apparatus is the first terminal, and the second communication apparatus is a network device; or the first communication apparatus is a positioning client, and the second communication apparatus is a network device, wherein the network device is an access network device, a location management function LMF network element, an access and mobility management function AMF, or a gateway mobile location center GMLC network element.

37. A communication apparatus, wherein the communication apparatus comprises one or more processors and one or more memories; and
the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 11, or perform the method according to any one of claims 12 to 18.

38. A computer-readable storage medium, wherein the computer-readable storage medium stores computer-executable instructions, and when the computer-executable instructions are invoked by the computer, the computer is enabled to perform the method according to any one of claims 1 to 11, or perform the method according to any one of claims 12 to 18.

39. A computer program product comprising instructions, wherein when the computer program product runs on a computer, the computer is enabled to perform the method according to any one of claims 1 to 11, or perform the method according to any one of claims 12 to 18.

40. A communication system, wherein the communication system comprises the communication apparatus according to any one of claims 19 to 29 and the communication apparatus according to any one of claims 30 to 36.
